# EUROPÄISCHE PATENTSCHRIFT

(11) **EP 3 717 568 B1**
(45) Veröffentlichungstag und Bekanntmachung des Hinweises auf die Patenterteilung: **13.04.2022**
(21) Anmeldenummer: 18803974.7
(22) Anmeldetag: 16.11.2018
(51) Int. Cl.: C08L 83/14, C08K 5/548

(54) **SILANMISCHUNGEN UND VERFAHREN ZU DEREN HERSTELLUNG**
SILANE MIXTURES AND PROCESS FOR PREPARING SAME
MÉLANGES DE SILANE ET PROCÉDÉ DE PRODUCTION

(30) Priorität: 28.11.2017 DE 102017221272
(43) Veröffentlichungstag der Anmeldung: 07.10.2020
(73) Patentinhaber: Evonik Operations GmbH, 45128 Essen (DE)
(72) Erfinder: KÖPFER, Alexander, 79872 Bernau im Schwarzwald (DE); RÖBEN, Caren, 45133 Essen (DE); HASSE, Andre, 52428 Jülich (DE); FORSTER, Frank, 63825 Schöllkrippen (DE)
(74) Vertreter: Evonik Patent Association
(86) Internationale Anmeldenummer: PCT/EP2018/081485
(87) Internationale Veröffentlichungsnummer: WO 2019/105757

(56) Entgegenhaltungen:
- WO-A1-03/055452
- US-A1- 2014 350 173
- MARIYA KHITERER ET AL: "Hybrid Polyelectrolyte Materials for Fuel Cell Applications: Design, Synthesis, and Evaluation of Proton-Conducting Bridged Polysilsesquioxanes", CHEMISTRY OF MATERIALS, Bd. 18, Nr. 16, 1. August 2006 (2006-08-01), Seiten 3665-3673, XP055535825, ISSN: 0897-4756, DOI: 10.1021/cm060440a
- DATABASE WPI Week 201255 Thomson Scientific, London, GB; AN 2012-K33113 XP002787533, -& JP 2012 149189 A (SUMITOMO RUBBER IND LTD) 9. August 2012 (2012-08-09) in der Anmeldung erwähnt

## Beschreibung

Die Erfindung betrifft Silanmischungen und Verfahren zur deren Herstellung.

Aus EP 0670347 und EP 0753549 sind Kautschukmischungen, enthaltend mindestens einen Vernetzer, einen Füllstoff, gegebenenfalls weitere Kautschukhilfsmittel sowie mindestens ein Verstärkungsadditiv der Formel

R¹R²R³Si - X¹ - (-Sₓ - Y - )ₘ - (- Sₓ - X² - SiR¹R²R³)ₙ

bekannt.

Aus JP2012149189 ist das Silan der Formel (R¹O)ₗR²₍₃₋ₗ₎Si-R³-(SₘR⁴₎n-S-R⁵, mit R⁵=-C(=O)-R⁶ R⁶ = C1-C20 bekannt.

Ferner sind aus EP 1375504 Silane der Formel

(R¹O)_{(3-P)} (R²)_{P}Si-R³-Sₘ-R⁴-(Sₙ-R⁴)_{q}-Sₘ-R³-Si(R²)_{P}(OR¹)(_{3-P})

bekannt.

Aus WO 2005/059022 sind Kautschukmischungen, enthaltend ein Silan der Formel

[R²R³R⁴Si-R⁵-S-R⁶-R⁷-]R¹

bekannt.

Ferner sind Kautschukmischungen, enthaltend ein bifunktionelles Silan und ein weiteres Silan der Formel (Y)G(Z) (WO 2012/092062) und Kautschukmischungen, enthaltend Bistriethoxysilylpropylpolysulfid und Bistriethoxysilylpropylmonosulfid (EP1085045) bekannt.

Aus EP 1928949 ist eine Kautschukmischung, enthaltend die Silane (H₅C₂O)₃Si-(CH₂)₃-X-(CH₂)₆-S₂-(CH₂)₆-X-(CH₂)₃-Si(OC₂H₅)₃ und/oder (H₅C_{2O})₃Si-(CH₂)₃-X-(CH₂)₁₀-S₂-(CH₂)₆-X-(CH₂)₁₀-Si(OC₂H₅)₃ und (H₅C_{2O})₃Si-(CH₂)₃-Sm-(CH₂)₃-Si(OC₂H₅)₃ bekannt.

Aus WO 03/055452 A1 sind hybridische organische-anorganische Adsorbenzien bekannt. In einem Beispiel werden Silanmischungen aus Bis(3-triethoxysilyl)propyldisulfd und 1,4-Bis(triethoxysilyl)benzen eingesetzt.

Aus MARIYA KHITERER ET AL: "Hybrid Polyelectrolyte Materials for Fuel Cell Applications: Design, Synthesis, and Evaluation of Proton-Conducting Bridged Polysilsesquioxanes", CHEMISTRY OF MATERIALS, Bd. 18, Nr. 16, 1 August 2006, Seiten 3665-3673 sind hybridische polyelektrolytische Materialien für Brennstoffzellen bekannt. Es werden unter anderem Silanmischungen aus Bis(3-triethoxylsilyl)-propyldisulfid und 1,8-Bis(triethoxysilyl)octan eingesetzt.

Auch US 2014/350173 A1 und JP 2012 149189 A offenbaren Kautschukzusammensetzungen für Reifen, die Silane mit S-Alkyl-S-Gruppen enthalten.

Aufgabe der vorliegenden Erfindung ist es, Silanmischungen zur Verfügung zu stellen, welche gegenüber aus dem Stand der Technik bekannten Silanen einen verbesserten Rollwiderstand und dynamische Steifigkeit in Kautschukmischungen aufweisen.

Gegenstand der Erfindung ist eine Silanmischung, enthaltend ein Silan der Formel I

(R¹)_{y}(R²)_{3-y}Si-R³-(S-R⁴)ₙ-Sₓ-R⁵ (I),

und ein Silan der Formel II

(R¹)_{y}(R²)_{3-y}Si-R³-Si(R¹)_{y}(R²)_{3-y} (II),

wobei R¹ gleich oder verschieden sind und C1-C10-Alkoxygruppen, vorzugsweise Methoxy- oder Ethoxygruppen, Phenoxygruppe, C4-C10-Cycloalkoxygruppen oder Alkylpolyethergruppe -O-(R⁶-O)ᵣ₋R⁷ mit R⁶ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, vorzugsweise -CH₂-CH₂-, r eine ganze Zahl von 1 bis 30, vorzugsweise 3 bis 10, und R⁷ unsubstituierte oder substituierte, verzweigte oder unverzweigte einbindige Alkyl-, Alkenyl-, Aryl- oder Aralkylgruppen, vorzugsweise C₁₃H₂₇ Alkyl-Gruppe ist,
R² gleich oder verschieden sind und C6-C20-Arylgruppen, vorzugsweise Phenyl, C1-C10-Alkylgruppen, vorzugsweise Methyl oder Ethyl, C2-C20-Alkenylgruppe, C7-C20-Aralkylgruppe oder Halogen, vorzugsweise Cl ist,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe, bevorzugt C1-C20-, besonders bevorzugt C1-C10-, ganz besonders bevorzugt C2-C8-, insbesondere bevorzugt CH₂CH₂, CH₂CH₂CH₂ und (CH₂)₈ sind,
R⁴ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe, bevorzugt C1-C20-, besonders bevorzugt C1-C10-, ganz besonders bevorzugt C2-C7-, insbesondere bevorzugt (CH₂)₆, sind,
x eine ganze Zahl von 1 bis 10 ist, vorzugsweise 1 bis 4, besonders bevorzugt 1 oder 2, ist,
für x gleich 1 R⁵ Wasserstoff oder eine -C(=O)-R⁸ Gruppe mit R⁸ gleich Wasserstoff, eine C1-C20 Alkylgruppe, vorzugsweise C1-C17, C6-C20-Arylgruppen, vorzugsweise Phenyl, C2-C20-Alkenylgruppe oder eine C7-C20-Aralkylgruppe ist und n gleich 1, 2 oder 3, vorzugsweise 1, ist, für x gleich 2 bis 10 R⁵ gleich -(R⁴-S)ₙ-R³-Si(R¹)_{y}(R²)_{3-y} ist und n gleich
1, ist,
und y gleich oder verschieden sind und 1, 2 oder 3 sind,
und das Molverhältnis an Silan der Formel I zu Silan der Formel II 15:85 - 90:10, vorzugsweise 20:80 - 90:10, besonders bevorzugt 25:75-90:10, ganz besonders bevorzugt 30:70 - 86:14, beträgt.

Bevorzugt kann die Silanmischung ein Silan der Formel I

(R¹)_{y}(R²)_{3-y}Si-R³-(S-R⁴)ₙ-Sₓ-R⁵ (I),

und ein Silan der Formel II

(R¹)_{y}(R²)_{3-y}Si-R³-Si(R¹)_{y}(R²)_{3-y} (II),

enthalten, wobei n gleich 1 sind und R¹, R², R³, R⁴, R⁵, x und y die gleiche Bedeutung haben wie oben beschrieben.

Die erfindungsgemäße Silanmischung kann weitere Additive enthalten oder nur aus Silanen der Formel I und Silanen der Formel II bestehen.

Die erfindungsgemäße Silanmischung kann Oligomere, die durch Hydrolyse und Kondensation der Silane der Formel I und/oder Silane der Formel II entstehen, enthalten.

Die erfindungsgemäße Silanmischung kann auf einem Träger, beispielsweise Wachs, Polymer oder Ruß, aufgebracht sein. Die erfindungsgemäße Silanmischung kann auf einer Kieselsäure aufgebracht sein, wobei die Anbindung physikalisch oder chemisch erfolgt sein kann.

R³ bzw. R⁴ können unabhänqiq voneinander -CH₂-, -CH₂CH₂-, -CH₂CH₂CH₂-, -CH₂CH₂CH₂CH₂-,-CH(CH₃)-, -CH₂CH(CH₃)-, -CH(CH₃)CH₂-, -C(CH₃)₂-, -CH(C₂H₅)-, -CH₂CH₂CH(CH₃)-,-CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂CH₂CH₂-oder 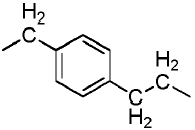 bzw. 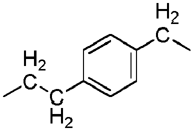 sein.

R¹ kann bevorzugt Methoxy oder Ethoxy sein.
(EtO)₃Si-CH₂-S-(CH₂)-S₂-(CH₂)-S-CH₂-Si(OEt)₃,
(EtO)₃Si-(CH₂)₂-S-(CH₂)-S₂-(CH₂)-S-(CH₂)₂-Si(OEt)₃,
(EtO)₃Si-(CH₂)₃-S-(CH₂)-S₂-(CH₂)-S-(CH₂)₃-Si(OEt)₃,
(EtO)₃Si-CH₂-S-(CH₂)₂-S₂-(CH₂)₂-S-CH₂-Si(OEt)₃,
(EtO)₃Si-(CH₂)₂-S-(CH₂)₂-S₂-(CH₂)₂-S-(CH₂)₂-Si(OEt)₃,
(EtO)₃Si-(CH₂)₃-S-(CH₂)₂-S₂-(CH₂)₂-S-(CH₂)₃-Si(OEt)₃,
(EtO)₃Si-CH₂-S-(CH₂)₃-S₂-(CH₂)₃-S-CH₂-Si(OEt)₃,
(EtO)₃Si-(CH₂)₂-S-(CH₂)₃-S₂-(CH₂)₃-S-(CH₂)₂-Si(OEt)₃,
(EtO)₃Si-(CH₂)₃-S-(CH₂)₃-S₂-(CH₂)₃-S-(CH₂)₃-Si(OEt)₃,
(EtO)₃Si-CH₂-S-(CH₂)₄-S₂-(CH₂)₄-S-CH₂-Si(OEt)₃,
(EtO)₃Si-(CH₂)₂-S-(CH₂)₄-S₂-(CH₂)₄-S-(CH₂)₂-Si(OEt)₃,
(EtO)₃Si-(CH₂)₃-S-(CH₂)₄-S₂-(CH₂)₄-S-(CH₂)₃-Si(OEt)₃,
(EtO)₃Si-CH₂-S-(CH₂)₅-S₂-(CH₂)₅-S-CH₂-Si(OEt)₃,
(EtO)₃Si-(CH₂)₂-S-(CH₂)₅-S₂-(CH₂)₅-S-(CH₂)₂-Si(OEt)₃,
(EtO)₃Si-(CH₂)₃-S-(CH₂)₅-S₂-(CH₂)₅-S-(CH₂)₃-Si(OEt)₃,
(EtO)₃Si-CH₂-S-(CH₂)₆-S₂-(CH₂)₆-S-CH₂-Si(OEt)₃,
(EtO)₃Si-(CH₂)₂-S-(CH₂)₆-S₂-(CH₂)₆-S-(CH₂)₂-Si(OEt)₃,
(EtO)₃Si-(CH₂)₃-S-(CH₂)₆-S₂-(CH₂)₆-S-(CH₂)₃-Si(OEt)₃.
(EtO)₃Si-(CH₂)₃-S-(CH₂)- S₋C(=O)-CH₃,
(EtO)₃Si-(CH₂)₃-S-(CH₂)- S₋C(=O)-C₂H₅,
(EtO)₃Si-(CH₂)₃-S-(CH₂)- S₋C(=O)-C₃H₇,
(EtO)₃Si-(CH₂)₃-S-(CH₂)- S₋C(=O)-C₄H₉,
(EtO)₃Si-(CH₂)₃-S-(CH₂)- S₋C(=O)-C₅H₁₁,
(EtO)₃Si-(CH₂)₃-S-(CH₂)- S₋C(=O)-C₆H₁₃,
(EtO)₃Si-(CH₂)₃-S-(CH₂)- S₋C(=O)-C₇H₁₅,
(EtO)₃Si-(CH₂)₃-S-(CH₂)- S₋C(=O)-C₉H₁₉,
(EtO)₃Si-(CH₂)₃-S-(CH₂)- S₋C(=O)-C₁₁H₂₃,
(EtO)₃Si-(CH₂)₃-S-(CH₂)- S₋C(=O)-C₁₃H₂₇,
(EtO)₃Si-(CH₂)₃-S-(CH₂)- S₋C(=O)-C₁₅H₃₁,
(EtO)₃Si-(CH₂)₃-S-(CH₂)- S₋C(=O)-C₁₇H₃₅,
(EtO)₃Si-(CH₂)₃-S-(CH₂)₂- S₋C(=O)-CH₃,
(EtO)₃Si-(CH₂)₃-S-(CH₂)₂- S₋C(=O)-C₂H₅,
(EtO)₃Si-(CH₂)₃-S-(CH₂)₂- S₋C(=O)-C₃H₇,
(EtO)₃Si-(CH₂)₃-S-(CH₂)₂- S₋C(=O)-C₄H₉,
(EtO)₃Si-(CH₂)₃-S-(CH₂)₂- S₋C(=O)-C₅H₁₁,
(EtO)₃Si-(CH₂)₃-S-(CH₂)₂- S₋C(=O)-C₆H₁₃,
(EtO)₃Si-(CH₂)₃-S-(CH₂)₂- S₋C(=O)-C₇H₁₅,
(EtO)₃Si-(CH₂)₃-S-(CH₂)₂- S₋C(=O)-C₉H₁₉,
(EtO)₃Si-(CH₂)₃-S-(CH₂)₂- S₋C(=O)-C₁₁H₂₃,
(EtO)₃Si-(CH₂)₃-S-(CH₂)₂- S₋C(=O)-C₁₃H₂₇,
(EtO)₃Si-(CH₂)₃-S-(CH₂)₂- S₋C(=O)-C₁₅H₃₁,
(EtO)₃Si-(CH₂)₃-S-(CH₂)₂- S₋C(=O)-C₁₇H₃₅,
(EtO)₃Si-(CH₂)₃-S-(CH₂)₃- S₋C(=O)-CH₃,
(EtO)₃Si-(CH₂)₃-S-(CH₂)₃- S₋C(=O)-C₂H₅,
(EtO)₃Si-(CH₂)₃-S-(CH₂)₃- S₋C(=O)-C₃H₇,
(EtO)₃Si-(CH₂)₃-S-(CH₂)₃- S₋C(=O)-C₄H₉,
(EtO)₃Si-(CH₂)₃-S-(CH₂)₃- S₋C(=O)-C₅H₁₁,
(EtO)₃Si-(CH₂)₃-S-(CH₂)₃- S₋C(=O)-C₆H₁₃,
(EtO)₃Si-(CH₂)₃-S-(CH₂)₃- S₋C(=O)-C₇H₁₅,
(EtO)₃Si-(CH₂)₃-S-(CH₂)₃- S₋C(=O)-C₉H₁₉**,**
(EtO)₃Si-(CH₂)₃-S-(CH₂)₃- S₋C(=O)-C₁₁H₂₃,
(EtO)₃Si-(CH₂)₃-S-(CH₂)₃- S₋C(=O)-C₁₃H₂₇,
(EtO)₃Si-(CH₂)₃-S-(CH₂)₃- S₋C(=O)-C₁₅H₃₁,
(EtO)₃Si-(CH₂)₃-S-(CH₂)₃- S₋C(=O)-C₁₇H₃₅,
(EtO)₃Si-(CH₂)₃-S-(CH₂)₆- S₋C(=O)-CH₃,
(EtO)₃Si-(CH₂)₃-S-(CH₂)₆- S₋C(=O)-C₂H₅,
(EtO)₃Si-(CH₂)₃-S-(CH₂)₆- S₋C(=O)-C₃H₇,
(EtO)₃Si-(CH₂)₃-S-(CH₂)₆- S₋C(=O)-C₄H₉,
(EtO)₃Si-(CH₂)₃-S-(CH₂)₆- S₋C(=O)-C₅H₁₁,
(EtO)₃Si-(CH₂)₃-S-(CH₂)₆- S₋C(=O)-C₆H₁₃,
(EtO)₃Si-(CH₂)₃-S-(CH₂)₆- S₋C(=O)-C₇H₁₅,
(EtO)₃Si-(CH₂)₃-S-(CH₂)₆- S₋C(=O)-C₉H₁₉,
(EtO)₃Si-(CH₂)₃-S-(CH₂)₆- S₋C(=O)-C₁₁H₂₃,
(EtO)₃Si-(CH₂)₃-S-(CH₂)₆- S₋C(=O)-C₁₃H₂₇,
(EtO)₃Si-(CH₂)₃-S-(CH₂)₆- S₋C(=O)-C₁₅H₃₁,
(EtO)₃Si-(CH₂)₃-S-(CH₂)₆- S₋C(=O)-C₁₇H₃₅,

Insbesondere bevorzugt ist das Silan der Formel I (EtO)₃Si-(CH₂)₃-S-(CH₂)₆-S₂-(CH₂)₆-S-(CH₂)₃-Si(OEt)₃, (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ und (EtO)₃Si-(CH₂)₃-S-(CH₂)₆-S-C(=O)-C₁₇H₃₅.

Silane der Formel II können bevorzugt sein:
(EtO)₃Si-(CH₂)-Si(OEt)₃,
(EtO)₃Si-(CH₂)₂-Si(OEt)₃,
(EtO)₃Si-(CH₂)₃-Si(OEt)₃,
(EtO)₃Si-(CH₂)₄-Si(OEt)₃,
(EtO)₃Si-(CH₂)₅-Si(OEt)₃,
(EtO)₃Si-(CH₂)₆-Si(OEt)₃,
(EtO)₃Si-(CH₂)₇₋Si(OEt)₃,
(EtO)₃Si-(CH₂)₈-Si(OEt)₃,
(EtO)₃Si-(CH₂)₉-Si(OEt)₃,
(EtO)₃Si-(CH₂)₁₀₋Si(OEt)₃,

Insbesondere bevorzugt ist das Silan der Formel II
(EtO)₃Si-(CH₂)₈-Si(OEt)₃.

Ganz besonders bevorzugt ist eine Silanmischung aus (EtO)₃Si-(CH₂)₃-S-(CH₂)₆-S₂-(CH₂)₆-S-(CH₂)₃-Si(OEt)₃,(EtO)₃Si-(CH₂)₃-S-(CH₂)₆-S-C(=O)-CH₃, (EtO)₃Si-(CH₂)₃-S-(CH₂)₆-S-C(=O)-C₇H₁₅ oder (EtO)₃Si-(CH₂)₃-S-(CH₂)₆-S-C(=O)-C₁₇H₃₅ und (EtO)₃Si-(CH₂)₈-Si(OEt)₃.

Ein weiterer Gegenstand der Erfindung ist ein Verfahren zur Herstellung der erfindungsgemäßen Silanmischung, welches dadurch gekennzeichnet ist, dass man das Silan der Formel I

(R¹)y(R²)_{3-y}Si-R³-(S-R⁴)ₙ-Sₓ-R⁵ (I),

und ein Silan der Formel II

(R¹)_{y}(R²)_{3-y}Si-R³-Si(R¹)_{y}(R²)_{3-y} (II),

wobei R¹, R², R³, R⁴, R⁵, n, x und y die oben genannte Bedeutung haben, in einem Molverhältnis von 15:85 - 90:10, vorzugsweise 20:80 - 90:10, besonders bevorzugt 25:75-90:10, ganz besonders bevorzugt 30:70 - 86:14, mischt.

Vorzugsweise kann man ein Silan der Formel I

(R¹)y(R²)_{3-y}Si-R³-(S-R⁴)ₙ-Sₓ-R⁵ (I),

und ein Silan der Formel II

(R¹)_{y}(R²)_{3-y}Si-R³-Si(R¹)_{y}(R²)_{3-y} (II),

wobei R¹, R², R³, R⁴, R⁵, x und y die oben genannte Bedeutung haben und n gleich 1 sind, mischen.

Das erfindungsgemäße Verfahren kann unter Luftausschluss durchgeführt werden. Das erfindungsgemäße Verfahren kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden. Bevorzugt kann das erfindungsgemäße Verfahren bei Normaldruck durchgeführt werden.

Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Das erfindungsgemäße Verfahren kann zwischen 20 °C und 100 °C, bevorzugt zwischen 20 °C und 50 °C, besonders bevorzugt zwischen 20 °C und 30 °C, durchgeführt werden.

Das erfindungsgemäße Verfahren kann in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin oder Essigsäuremethylester oder einer Mischung der zuvor genannten Lösungsmittel durchgeführt werden. Das erfindungsgemäße Verfahren kann bevorzugt ohne Lösungsmittel durchgeführt werden.

Die erfindungsgemäße Silanmischung kann als Haftvermittler zwischen anorganischen Materialien, zum Beispiel Glaskugeln, Glassplittern, Glasoberflächen, Glasfasern, oder oxidischen Füllstoffen, bevorzugt Kieselsäuren wie gefällten Kieselsäuren und pyrogenen Kieselsäuren,
und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die erfindungsgemäße Silanmischung kann als Kopplungsreagenzien in gefüllten Kautschukmischungen, beispielsweise Reifenlaufflächen, technischen Gummiartikeln oder Schuhsolen, verwendet werden.

Vorteile der erfindungsgemäßen Silanmischungen ein verbesserter Rollwiderstand und eine verbesserte dynamische Steifigkeit in Kautschukmischungen.

### Beispiele

NMR-Methode: Die in den Beispielen als Analysenergebnisse angegebenen Molverhältnisse und Massenanteile stammen aus ¹³C-NMR-Messungen mit den folgenden Kennzahlen: 100.6 MHz, 1000 Scans, Lösungsmittel CDCl₃, interner Standard für die Kalibrierung: Tetramethylsilan, Relaxationshilfsmittel Cr(acac)₃, für die Bestimmung des Massenanteils im Produkt wird eine definierte Menge Dimethylsulfon als interner Standard zugegeben und aus den Molverhältnissen der Produkte dazu der Massenanteil berechnet.

Vergleichsbeispiel 1: 3-Octanoylthio-1-propyltriethoxysilane NXT Silan der Firma Momentive Performance Materials.

Vergleichsbeispiel 2: Bistriethoxysilyloctan der Firma ABCR GmbH.

Vergleichsbeispiel 3: Bis(triethoxysilylpropyl)disulfid der Firma Evonik Industries AG.

Vergleichsbeispiel 4: 1-Chlor-6-thiopropyltriethoxysilylhexan NaOEt (21% in EtOH; 1562 g; 4,820 mol) wurde über 1 h zu Mercaptopropyltriethoxysilan (1233 g; 5,170 mol) dosiert während bei Raumtemperatur gerührt wurde. Nach vollständiger Zugabe wurde die Reaktionsmischung 2 h am Rückfluss erhitzt und anschließend auf Raumtemperatur erkalten gelassen. Das entstandene Intermediat wurde über 30 min zu auf 80 °C erwärmtem 1,6-Dichlorhexan (4828 g; 31,14 mol) dosiert. Nach vollständiger Zugabe wurde das Reaktionsgemisch 3 h am Rückfluss erhitzt bevor es auf Raumtemperatur erkalten gelassen wurde. Die Reaktionsmischung wurde filtriert und der Filterkuchen mit EtOH gespült. Die flüchtigen Bestandteile wurden unter vermindertem Druck entfernt und das Zwischenprodukt 1-Chlor-6-thiopropyltriethoxysilylhexan (Ausbeute: 89%, Molverhältnis: 97% 1-Chlor-6-thiopropyltriethoxysilylhexan, 3% Bis(thiopropyltriethoxysilyl)hexan; Gew.-%: 95 Gew.-% 1-Chlor-6-thiopropyltriethoxysilylhexan, 5 Gew.-% 1,6-Bis(thiopropyltriethoxysilyl)hexan) als farblose bis braune Flüssigkeit erhalten.

Vergleichsbeispiel 5: 6-Bis(thiopropyltriethoxysilylhexyl)disulfid 6-Bis(thiopropyltriethoxysilylhexyl)disulfid wurde gemäß Synthesebeispiel 1 und Beispiel 1 der EP 1375504 hergestellt.

Gegenüber dem Synthesebeispiel 1 der EP 1375504 wurde das Zwischenprodukt nicht destilliert. Analytik: (88% Ausbeute, Molverhältnis: Silan der Formel I: 94% (EtO)3Si(CH₂)₃S(CH₂)₆S₂(CH₂)₆S(CH₂)₃Si(OEt)₃ und 6% (EtO)₃Si(CH₂)₃S(CH₂)₆S(CH₂)₃Si(OEt)₃, Gew.-%: Silan der Formel I: 95 Gew.-% (EtO)3Si(CH₂)₃S(CH₂)₆S₂(CH₂)₆S(CH₂)₃Si(OEt)₃ und 5 Gew.-% (EtO)₃Si(CH₂)₃S(CH₂)₆S(CH₂)₃Si(OEt)₃)

Vergleichsbeispiel 6: S-(6-((3-(Triethoxysilyl)propyl)thio)hexyl)thioacetat Na₂CO₃ (59,78 g; 0,564 mol) und eine wässrige Lösung von NaSH (40% in Wasser; 79,04 g; 0,564 mol) wurden mit Wasser (97,52 g) vorgelegt. Dann wurde Tetrabutylphosphoniumbromid (TBPB) (50% in Wasser; 3,190 g; 0,005 mol) zugegeben und Acetylchlorid (40,58 g; 0,517 mol) über 1 h zugetropft wobei die Reaktionstemperatur bei 25-32 °C gehalten wurde. Nach vollständiger Zugabe des Acetylchlorids wurde 1 h bei Raumtemperatur gerührt. Dann wurde TBPB (50% in Wasser; 3,190 g; 0,005 mol) und 1-Chlor-6-thiopropyltriethoxysilylhexan (aus Vergleichsbeispiel 4; 167,8 g; 0,470 mol) zugegeben und 3-5 h am Rückfluss erhitzt. Der Reaktionsfortschritt wurde mittels Gaschromatographie verfolgt. Als das 1-Chlor-6-thiopropyltriethoxysilylhexan zu >96% abreagiert war wurde Wasser zugegeben bis sich alle Salze gelöst hatten und die Phasen wurden separiert. Die flüchtigen Bestandteile der organischen Phase wurden unter vermindertem Druck entfernt und S-(6-((3-(Triethoxysilyl)propyl)thio)hexyl)thioacetat (Ausbeute: 90%, Molverhältnis: 97% S-(6-((3-(Triethoxysilyl)propyl)thio)hexyl)thioacetat, 3% Bis(thiopropyltriethoxysilyl)hexan; Gew.-%: 96 Gew.-% S-(6-((3-(Triethoxysilyl)propyl)thio)hexyl)thioacetat, 4 Gew.-% 1,6-Bis(thiopropyltriethoxysilyl)hexan) als gelbe bis braune Flüssigkeit erhalten.

Vergleichsbeispiel 7: S-(6-((3-(Triethoxysilyl)propyl)thio)hexyl)thiooctanoat Na₂CO₃ (220,2 g; 2,077 mol) und eine wässrige Lösung von NaSH (40% in Wasser; 291,2 g; 2,077 mol) wurden mit Wasser (339,2 g) vorgelegt. Dann wurde Tetrabutylammoniumbromid (TBAB) (50% in Wasser; 10,96 g; 0,017 mol) zugegeben und Octanoylchlorid (307,2 g; 1,889 mol) über 2,5 h zugetropft wobei die Reaktionstemperatur bei 24-28 °C gehalten wurde. Nach vollständiger Zugabe des Octanoylchlorids wurde 1 h bei Raumtemperatur gerührt. Dann wurde TBAB (50% in Wasser; 32,88 g; 0,051 mol) und 1-Chlor-6-thiopropyltriethoxysilylhexan (aus Vergleichsbeispiel 4, 606,9 g; 1,700 mol) zugegeben und 10 h am Rückfluss erhitzt. Dann wurde Wasser zugegeben bis sich alle Salze gelöst hatten und die Phasen wurden separiert. Die flüchtigen Bestandteile der organischen Phase wurden unter vermindertem Druck entfernt und S-(6-((3-(Triethoxysilyl)propyl)thio)hexyl)thiooctanoat (Ausbeute: 95%, Molverhältnis: 97% S-(6-((3-(Triethoxysilyl)propyl)thio)hexyl)thiooctanoat, 3% Bis(thiopropyltriethoxysilyl)hexan; Gew.-%: 96 Gew.-% S-(6-((3-(Triethoxysilyl)propyl)thio)hexyl)thiooctanoat, 4 Gew.-% 1,6-Bis(thiopropyltriethoxysilyl)hexan) als gelbe bis braune Flüssigkeit erhalten.

Vergleichsbeispiel 8: S-(6-((3-(Triethoxysilyl)propyl)thio)hexyl)thiooctadecanoat S-(6-((3-(Triethoxysilyl)propyl)thio)hexyl)thiooctadecanoat wurde aus 1-Chlor-6-thiopropyltriethoxysilylhexan (aus Vergleichsbeispiel 4) entsprechend des Synthesebeispiels 1 und 3 in JP2012149189 hergestellt.

S-(6-((3-(Triethoxysilyl)propyl)thio)hexyl)thiooctadecanoat (Ausbeute: 89%, Molverhältnis: 97% S-(6-((3-(Triethoxysilyl)propyl)thio)hexyl)thiooctadecanoat, 3% Bis(thiopropyltriethoxysilyl)hexan; Gew.-%: 97 Gew.-% S-(6-((3-(Triethoxysilyl)propyl)thio)hexyl)thiooctadecanoat, 3 Gew.-% 1,6-Bis(thiopropyltriethoxysilyl)hexan) wurde als gelbe bis braune Flüssigkeit erhalten.

Vergleichsbeispiel 9: In einen PE-Flachbeutel werden 6,84 Gewichtsteile Vergleichsbeispiel 1 mit 1,65 Gewichtsteilen Vergleichsbeispiel 2 eingewogen und vermischt. Diese Mischung entspricht einem Molverhältnis: 83 % (EtO)₃Si(CH₂)₃SCO(CH₂)₆CH₃ und 17 % (EtO)₃Si(CH₂)₈Si(OEt)₃.

Vergleichsbeispiel 10: In einen PE-Flachbeutel wurden 6,84 Gewichtsteile Vergleichsbeispiel 1 mit 2,47 Gewichtsteilen Vergleichsbeispiel 2 eingewogen und vermischt. Diese Mischung entspricht einem Molverhältnis: 77 % (EtO)₃Si(CH₂)₃SCO(CH₂)₆CH₃ und 23 % (EtO)₃Si(CH₂)₈Si(OEt)₃.

Vergleichsbeispiel 11: In einen PE-Flachbeutel wurden 6,84 Gewichtsteile Vergleichsbeispiel 1 mit 3,29 Gewichtsteilen Vergleichsbeispiel 2 eingewogen und vermischt. Diese Mischung entspricht einem Molverhältnis: 71 % (EtO)₃Si(CH₂)₃SCO(CH₂)₆CH₃ und 29 % (EtO)₃Si(CH₂)₈Si(OEt)₃.

Vergleichsbeispiel 12: In einen PE-Flachbeutel wurden 6,30 Gewichtsteile Vergleichsbeispiel 1 mit 2,53 Gewichtsteilen Vergleichsbeispiel 2 eingewogen und vermischt. Diese Mischung entspricht einem Molverhältnis: 75 % (EtO)₃Si(CH₂)₃SCO(CH₂)₆CH₃ und 25 % (EtO)₃Si(CH₂)₈Si(OEt)₃.

Vergleichsbeispiel 13: In einen PE-Flachbeutel wurden 4,20 Gewichtsteile Vergleichsbeispiel 1 mit 3,79 Gewichtsteilen Vergleichsbeispiel 2 eingewogen und vermischt. Diese Mischung entspricht einem Molverhältnis: 57 % (EtO)₃Si(CH₂)₃SCO(CH₂)₆CH₃ und 43 % (EtO)₃Si(CH₂)₈Si(OEt)₃. Vergleichsbeispiel 14: In einen PE-Flachbeutel wurden 2,10 Gewichtsteile Vergleichsbeispiel 1 mit 5,06 Gewichtsteilen Vergleichsbeispiel 2 eingewogen und vermischt. Diese Mischung entspricht einem Molverhältnis: 33 % (EtO)₃Si(CH₂)₃SCO(CH₂)₆CH₃ und 67 % (EtO)₃Si(CH₂)₈Si(OEt)₃.

Die Beispiele 1-2, 11-14 sind Referenzbeispiele und entsprechen nicht der Erfindung.

Beispiel 1: In einen PE-Flachbeutel wurden 6,84 Gewichtsteile Vergleichsbeispiel 3 mit 2,53 Gewichtsteilen Vergleichsbeispiel 2 eingewogen und vermischt. Diese Mischung entspricht einem Molverhältnis: 71 % (EtO)₃Si(CH₂)₃S₂(CH₂)₃Si(OEt)₃ und 29 % (EtO)₃Si(CH₂)₈Si(OEt)₃.

Beispiel 2: In einen PE-Flachbeutel wurden 6,84 Gewichtsteile Vergleichsbeispiel 3 mit 3,79 Gewichtsteilen Vergleichsbeispiel 2 eingewogen und vermischt. Diese Mischung entspricht einem Molverhältnis: 63 % (EtO)₃Si(CH₂)₃S₂(CH₂)₃Si(OEt)₃ und 37 % (EtO)₃Si(CH₂)₈Si(OEt)₃.

Beispiel 3: In einen PE-Flachbeutel wurden 6,84 Gewichtsteile Vergleichsbeispiel 5 mit 1,70 Gewichtsteilen Vergleichsbeispiel 2 eingewogen und vermischt. Diese Mischung entspricht einem Molverhältnis: 66 % (EtO₎3Si(CH₂)₃S(CH₂)₆S₂(CH₂)₆S(CH₂)₃Si(OEt)₃ und 34% (EtO)₃Si(CH₂)₈Si(OEt)₃.

Beispiel 4: In einen PE-Flachbeutel wurden 6,84 Gewichtsteile Vergleichsbeispiel 5 mit 2,55 Gewichtsteilen Vergleichsbeispiel 2 eingewogen und vermischt. Diese Mischung entspricht einem Molverhältnis: 58 % (EtO₎3Si(CH₂)₃S(CH₂)₆S₂(CH₂)₆S(CH₂)₃Si(OEt)₃ und 42% (EtO)₃Si(CH₂)₈Si(OEt)₃.

Beispiel 5: In einen PE-Flachbeutel wurden 6,84 Gewichtsteile Vergleichsbeispiel 6 mit 1,51 Gewichtsteilen Vergleichsbeispiel 2 eingewogen und vermischt. Diese Mischung entspricht einem Molverhältnis: 80 % (EtO)₃Si(CH₂)₃S(CH₂)₆SCOCH₃ und 20 % (EtO)₃Si(CH₂)₈Si(OEt)₃.

Beispiel 6: In einen PE-Flachbeutel wurden 6,84 Gewichtsteile Vergleichsbeispiel 6 mit 2,27 Gewichtsteilen Vergleichsbeispiel 2 eingewogen und vermischt. Diese Mischung entspricht einem Molverhältnis: 74 % (EtO)₃Si(CH₂)₃S(CH₂)₆SCOCH₃ und 26 % (EtO)₃Si(CH₂)₈Si(OEt)₃.

Beispiel 7: In einen PE-Flachbeutel wurden 6,84 Gewichtsteile Vergleichsbeispiel 7 mit 1,25 Gewichtsteilen Vergleichsbeispiel 2 eingewogen und vermischt. Diese Mischung entspricht einem Molverhältnis: 80 % (EtO)₃Si(CH₂)₃S(CH₂)₆SCO(CH₂)₆CH₃ und 20 % (EtO)₃Si(CH₂)₈Si(OEt)₃.

Beispiel 8: In einen PE-Flachbeutel wurden 6,84 Gewichtsteile Vergleichsbeispiel 7 mit 1,87 Gewichtsteilen Vergleichsbeispiel 2 eingewogen und vermischt. Diese Mischung entspricht einem Molverhältnis: 74 % (EtO)₃Si(CH₂)₃S(CH₂)₆SCO(CH₂)₆CH₃ und 26 % (EtO)₃Si(CH₂)₈Si(OEt)₃.

Beispiel 9: In einen PE-Flachbeutel wurden 6,84 Gewichtsteile Vergleichsbeispiel 8 mit 0,97 Gewichtsteilen Vergleichsbeispiel 2 eingewogen und vermischt. Diese Mischung entspricht einem Molverhältnis: 80 % (EtO)₃Si(CH₂)₃S(CH₂)₆SCO(CH₂)₁₆CH₃ und 20 % (EtO)₃Si(CH₂)₈Si(OEt)₃.

Beispiel 10: In einen PE-Flachbeutel wurden 6,84 Gewichtsteile Vergleichsbeispiel 8 mit 1,45 Gewichtsteilen Vergleichsbeispiel 2 eingewogen und vermischt. Diese Mischung entspricht einem Molverhältnis: 74 % (EtO)₃Si(CH₂)₃S(CH₂)₆SCO(CH₂)₁₆CH₃ und 26 % (EtO)₃Si(CH₂)₈Si(OEt)₃.

Beispiel 11: In einen PE-Flachbeutel wurden 5,47 Gewichtsteile Vergleichsbeispiel 3 mit 1,26 Gewichtsteilen Vergleichsbeispiel 2 eingewogen und vermischt. Diese Mischung entspricht einem Molverhältnis: 80 % (EtO)₃Si(CH₂)₃S₂(CH₂)₃Si(OEt)₃ und 20 % (EtO)₃Si(CH₂)₃Si(OEt)₃.

Beispiel 12: In einen PE-Flachbeutel wurden 4,10 Gewichtsteile Vergleichsbeispiel 3 mit 2,53 Gewichtsteilen Vergleichsbeispiel 2 eingewogen und vermischt. Diese Mischung entspricht einem Molverhältnis: 60 % (EtO)₃Si(CH₂)₃S₂(CH₂)₃Si(OEt)₃ und 40 % (EtO)₃Si(CH₂)₈Si(OEt)₃.

Beispiel 13: In einen PE-Flachbeutel wurden 2,74 Gewichtsteile Vergleichsbeispiel 3 mit 3,79 Gewichtsteilen Vergleichsbeispiel 2 eingewogen und vermischt. Diese Mischung entspricht einem Molverhältnis: 40 % (EtO)₃Si(CH₂)₃S₂(CH₂)₃Si(OEt)₃ und 60 % (EtO)₃Si(CH₂)₈Si(OEt)₃.

Beispiel 14: In einen PE-Flachbeutel wurden 1,37 Gewichtsteile Vergleichsbeispiel 3 mit 5,06 Gewichtsteilen Vergleichsbeispiel 2 eingewogen und vermischt. Diese Mischung entspricht einem Molverhältnis: 20 % (EtO)₃Si(CH₂)₃S₂(CH₂)₃Si(OEt)₃ und 80 % (EtO)₃Si(CH₂)₈Si(OEt)₃.

Beispiel 15: In einen PE-Flachbeutel wurden 8,15 Gewichtsteile Vergleichsbeispiel 5 mit 1,26 Gewichtsteilen Vergleichsbeispiel 2 eingewogen und vermischt. Diese Mischung entspricht einem Molverhältnis: 74 % (EtO)3Si(CH₂)₃S(CH₂)₆S₂(CH₂)₆S(CH₂)₃Si(OEt)₃ und 26 % (EtO)₃Si(CH₂)₈Si(OEt)₃.

Beispiel 16: In einen PE-Flachbeutel wurden 6,11 Gewichtsteile Vergleichsbeispiel 5 mit 2,53 Gewichtsteilen Vergleichsbeispiel 2 eingewogen und vermischt. Diese Mischung entspricht einem Molverhältnis: 56 % (EtO₎3Si(CH₂)₃S(CH₂)₆S₂(CH₂)₆S(CH₂)₃Si(OEt)₃ und 44 % (EtO)₃Si(CH₂)₈Si(OEt)₃.

Beispiel 17: In einen PE-Flachbeutel wurden 4,08 Gewichtsteile Vergleichsbeispiel 5 mit 3,79 Gewichtsteilen Vergleichsbeispiel 2 eingewogen und vermischt. Diese Mischung entspricht einem Molverhältnis: 38 % (EtO)3Si(CH₂)₃S(CH₂)₆S₂(CH₂)₆S(CH₂)₃Si(OEt)₃ 62 % (EtO)₃Si(CH₂)₈Si(OEt)₃.

Beispiel 18: In einen PE-Flachbeutel wurden 2,04 Gewichtsteile Vergleichsbeispiel 5 mit 5,06 Gewichtsteilen Vergleichsbeispiel 2 eingewogen und vermischt. Diese Mischung entspricht einem Molverhältnis: 19 % (EtO)3Si(CH₂)₃S(CH₂)₆S₂(CH₂)₆S(CH₂)₃Si(OEt)₃ 81 % (EtO)₃Si(CH₂)₈Si(OEt)₃.

Beispiel 19: In einen PE-Flachbeutel wurden 9,14 Gewichtsteile Vergleichsbeispiel 6 mit 1,26 Gewichtsteilen Vergleichsbeispiel 2 eingewogen und vermischt. Diese Mischung entspricht einem Molverhältnis: 86 % (EtO)₃Si(CH₂)₃S(CH₂)₆SCOCH₃ und 14 % (EtO)₃Si(CH₂)₈Si(OEt)₃.

Beispiel 20: In einen PE-Flachbeutel wurden 6,86 Gewichtsteile Vergleichsbeispiel 6 mit 2,53 Gewichtsteilen Vergleichsbeispiel 2 eingewogen und vermischt. Diese Mischung entspricht einem Molverhältnis: 72 % (EtO)₃Si(CH₂)₃S(CH₂)₆SCOCH₃ und 28 % (EtO)₃Si(CH₂)₈Si(OEt)₃.

Beispiel 21: In einen PE-Flachbeutel wurden 4,57 Gewichtsteile Vergleichsbeispiel 6 mit 3,79 Gewichtsteile Vergleichsbeispiel 2 eingewogen und vermischt. Diese Mischung entspricht einem Molverhältnis: 55 % (EtO)₃Si(CH₂)₃S(CH₂)₆SCOCH₃ und 45 % (EtO)₃Si(CH₂)₈Si(OEt)₃.

Beispiel 22: In einen PE-Flachbeutel wurden 2,29 Gewichtsteile Vergleichsbeispiel 6 mit 5,06 Gewichtsteilen Vergleichsbeispiel 2 eingewogen und vermischt. Diese Mischung entspricht einem Molverhältnis: 32 % (EtO)₃Si(CH₂)₃S(CH₂)₆SCOCH₃ und 68 % (EtO)₃Si(CH₂)₈Si(OEt)₃.

Beispiel 23: In einen PE-Flachbeutel wurden 11,08 Gewichtsteile Vergleichsbeispiel 7 mit 1,26 Gewichtsteilen Vergleichsbeispiel 2 eingewogen und vermischt. Diese Mischung entspricht einem Molverhältnis: 85 % (EtO)₃Si(CH₂)₃S(CH₂)₆SCO(CH₂)₆CH₃ und 15 % (EtO)₃Si(CH₂)₈Si(OEt)₃.

Beispiel 24: In einen PE-Flachbeutel wurden 8,31 Gewichtsteile Vergleichsbeispiel 7 mit 2,53 Gewichtsteilen Vergleichsbeispiel 2 eingewogen und vermischt. Diese Mischung entspricht einem Molverhältnis: 72 % (EtO)₃Si(CH₂)₃S(CH₂)₆SCO(CH₂)₆CH₃ und 28 % (EtO)₃Si(CH₂)₈Si(OEt)₃.

Beispiel 25: In einen PE-Flachbeutel wurden 5,54 Gewichtsteile Vergleichsbeispiel 7 mit 3,79 Gewichtsteilen Vergleichsbeispiel 2 eingewogen und vermischt. Diese Mischung entspricht einem Molverhältnis: 55 % (EtO)₃Si(CH₂)₃S(CH₂)₆SCO(CH₂)₆CH₃ und 45 % (EtO)₃Si(CH₂)₈Si(OEt)₃.

Beispiel 26: In einen PE-Flachbeutel wurden 2,77 Gewichtsteile Vergleichsbeispiel 7 mit 5,06 Gewichtsteilen Vergleichsbeispiel 2 eingewogen und vermischt. Diese Mischung entspricht einem Molverhältnis: 32 % (EtO)₃Si(CH₂)₃S(CH₂)₆SCO(CH₂)₆CH₃ und 68 % (EtO)₃Si(CH₂)₈Si(OEt)₃.

Beispiel 27: In einen PE-Flachbeutel wurden 14,32 Gewichtsteile Vergleichsbeispiel 8 mit 1,26 Gewichtsteilen Vergleichsbeispiel 2 eingewogen und vermischt. Diese Mischung entspricht einem Molverhältnis: 85 % (EtO)₃Si(CH₂)₃S(CH₂)₆SCO(CH₂)₁₆CH₃ und 15 % (EtO)₃Si(CH₂)₈Si(OEt)₃.

Beispiel 28: In einen PE-Flachbeutel wurden 10,74 Gewichtsteile Vergleichsbeispiel 8 mit 2,53 Gewichtsteilen Vergleichsbeispiel 2 eingewogen und vermischt. Diese Mischung entspricht einem Molverhältnis: 72 % (EtO)₃Si(CH₂)₃S(CH₂)₆SCO(CH₂)₁₆CH₃ und 28 % (EtO)₃Si(CH₂)₈Si(OEt)₃.

Beispiel 29: In einen PE-Flachbeutel wurden 7,16 Gewichtsteile Vergleichsbeispiel 8 mit 3,79 Gewichtsteilen Vergleichsbeispiel 2 eingewogen und vermischt. Diese Mischung entspricht einem Molverhältnis: 55 % (EtO)₃Si(CH₂)₃S(CH₂)₆SCO(CH₂)₁₆CH₃ und 45 % (EtO)₃Si(CH₂)₈Si(OEt)₃.

Beispiel 30: In einen PE-Flachbeutel wurden 5,06 Gewichtsteile Vergleichsbeispiel 8 mit 3,58 Gewichtsteilen Vergleichsbeispiel 2 eingewogen und vermischt. Diese Mischung entspricht einem Molverhältnis: 48 % (EtO)₃Si(CH₂)₃S(CH₂)₆SCO(CH₂)₁₆CH₃ und 52 % (EtO)₃Si(CH₂)₈Si(OEt)₃.

### Beispiel 31: Gummitechnische Untersuchungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die Silanmischungen enthalten alle eine identische phr-Menge an Silan, welches während der Vulkanisation mit dem Kautschuk reagiert. Das zweite Silan wird zusätzlich zugegeben.

In den folgenden Tabellen sind die Mischungen 1-5, 14-20 Referenzbeispiele und nicht erfindungsgemäß.

**Tabelle 1:**

| | Mischung 1 / phr | Mischung 2 / phr | Mischung 3 / phr | Mischung 4 / phr | Mischung 5 / phr | Mischung 6 / phr Erf. | Mischung 7 / phr Erf. | Mischung 8 / phr Erf. | Mischung 9 / phr Erf. | Mischung 10 / phr Erf. | Mischung 11/ phr Erf. | Mischung 12 / phr Erf. | Mischung 13 / phr Erf. |
|---|---|---|---|---|---|---|---|---|---|---|---|---|---|
| **1. Stufe** | | | | | | | | | | | | | |
| NR^{a)} | 10,0 | 10,0 | 10,0 | 10,0 | 10,0 | 10,0 | 10,0 | 10,0 | 10,0 | 10,0 | 10,0 | 10,0 | 10,0 |
| BR^{b)} | 18,0 | 18,0 | 18,0 | 18,0 | 18,0 | 18,0 | 18,0 | 18,0 | 18,0 | 18,0 | 18,0 | 18,0 | 18,0 |
| S-SBR^{c)} | 72,0 | 72,0 | 72,0 | 72,0 | 72,0 | 72,0 | 72,0 | 72,0 | 72,0 | 72,0 | 72,0 | 72,0 | 72,0 |
| Kieselsäure^{d)} | 95,0 | 95,0 | 95,0 | 95,0 | 95,0 | 95,0 | 95,0 | 95,0 | 95,0 | 95,0 | 95,0 | 95,0 | 95,0 |
| TDAE Öl^{e)} | 50,0 | 50,0 | 50,0 | 50,0 | 50,0 | 50,0 | 50,0 | 50,0 | 50,0 | 50,0 | 50,0 | 50,0 | 50,0 |
| 6PPD^{f)} | 2,0 | 2,0 | 2,0 | 2,0 | 2,0 | 2,0 | 2,0 | 2,0 | 2,0 | 2,0 | 2,0 | 2,0 | 2,0 |
| Ozonschutzwachs | 2,0 | 2,0 | 2,0 | 2,0 | 2,0 | 2,0 | 2,0 | 2,0 | 2,0 | 2,0 | 2,0 | 2,0 | 2,0 |
| Zinkoxid | 2,5 | 2,5 | 2,5 | 2,5 | 2,5 | 2,5 | 2,5 | 2,5 | 2,5 | 2,5 | 2,5 | 2,5 | 2,5 |
| Stearinsäure | 2,5 | 2,5 | 2,5 | 2,5 | 2,5 | 2,5 | 2,5 | 2,5 | 2,5 | 2,5 | 2,5 | 2,5 | 2,5 |
| Vergleichsbsp.9 | 8,49 | | | | | | | | | | | | |
| Vergleichsbsp.10 | | 9,31 | | | | | | | | | | | |
| Vergleichsbsp.11 | | | 10,13 | | | | | | | | | | |
| Beispiel 1 | | | | 9,37 | | | | | | | | | |
| Beispiel 2 | | | | | 10,63 | | | | | | | | |
| Beispiel 3 | | | | | | 8,54 | | | | | | | |
| Beispiel 4 | | | | | | | 9,39 | | | | | | |
| Beispiel 5 | | | | | | | | 8,35 | | | | | |
| Beispiel 6 | | | | | | | | | 9,11 | | | | |
| Beispiel 7 | | | | | | | | | | 8,09 | | | |
| Beispiel 8 | | | | | | | | | | | 8,71 | | |
| Beispiel 9 | | | | | | | | | | | | 7,81 | |
| Beispiel 10 | | | | | | | | | | | | | 8,29 |

| **2. Stufe** | | | | | | | | | | | | | |
|---|---|---|---|---|---|---|---|---|---|---|---|---|---|
| Batch Stufe 1 | | | | | | | | | | | | | |

| **3. Stufe** | | | | | | | | | | | | | |
|---|---|---|---|---|---|---|---|---|---|---|---|---|---|
| Batch Stufe 2 | | | | | | | | | | | | | |
| DPG^{g)} | 2,0 | 2,0 | 2,0 | 2,0 | 2,0 | 2,0 | 2,0 | 2,0 | 2,0 | 2,0 | 2,0 | 2,0 | 2,0 |
| CBS^{h}) | 2,0 | 2,0 | 2,0 | 2,0 | 2,0 | 2,0 | 2,0 | 2,0 | 2,0 | 2,0 | 2,0 | 2,0 | 2,0 |
| Schwefelⁱ⁾ | 2,0 | 2,0 | 2,0 | 2,0 | 2,0 | 2,0 | 2,0 | 2,0 | 2,0 | 2,0 | 2,0 | 2,0 | 2,0 |

### Verwendete Substanzen:

a) NR TSR SMR 10: Naturkautschuk (TSR = Technically Specified Rubber; SMR = Standard a) NR TSR: Naturkautschuk (TSR = Technically Specified Rubber).
b) Europrene Neocis BR 40, Fa. Polimeri.
c) S-SBR: Sprintan^{®} SLR-4601, Fa. Trinseo.
d) Kieselsäure: ULTRASIL^{®} VN 3 GR der Firma Evonik Industries AG (gefällte Kieselsäure, BET-Oberfläche = 175 m²/g).
e) TDAE-ÖI: TDAE = Treated Distillate Aromatic Extract.
f) 6PPD: *N*-(1,3-dimethylbutyl)-*N'*-phenyl-p-phenylene diamine (6PPD).
g) DPG: *N*,*N*'-Diphenyiguanidin (DPG).
h) CBS: *N*-Cyclohexyl-2-benzothiazolsulfenamid.

### i) Schwefel: Mahlschwefel.

Die Mischungsherstellung erfolgte unter in der Kautschukindustrie üblichen Verfahren in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95-t100 (gemessen am Moving Disc Rheometer gemäß ASTM D 5289-12/ ISO 6502) unter Druck bei 160°C - 170°C hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgte gemäß der in Tabelle 2 angegebenen Prüfmethode. Die Ergebnisse der gummitechnischen Prüfung sind in Tabelle 3 angegeben.

**Tabelle 2:**

| Physikalische Testung | | Norm/ Bedingungen |
|---|---|---|
| Viskoelastische Eigenschaften des Vulkanisats bei 70°C, 1 Hz | | RPA (= engl. "rubber process analyzer") in Anlehnung an ASTM D6601 vom zweiten Dehnungsdurchlauf ("strain sweep") |
| | Dynamischer Speichermodul G' bei 100% Dehnung / MPa | |
| | Verlustfaktor tan δ bei 10% Dehnung | |

**Tabelle 3:**

| | Mischung 1 | Mischung 2 | Mischung 3 | Mischung 4 | Mischung 5 |
|---|---|---|---|---|---|
| G'(100%) RPA/ MPa | 427 | 400 | 422 | 784 | 758 |
| tan δ (10%) RPA | 0,210 | 0,217 | 0,205 | 0,167 | 0,170 |
| | | | | | |

| | Mischung 6 Erf. | Mischung 7 Erf. | Mischung 8 Erf. | Mischung 9 Erf. | Mischung 10 Erf. |
|---|---|---|---|---|---|
| G'(100%) RPA/ MPa | 729 | 746 | 688 | 702 | 601 |
| tan δ (10%) RPA | 0,160 | 0,156 | 0,164 | 0,164 | 0,169 |
| | | | | | |

| | Mischung 11 Erf. | Mischung 12 Erf. | Mischung 13 Erf. | | |
|---|---|---|---|---|---|
| G'(100%) RPA/ MPa | 626 | 598 | 585 | | |
| tan δ (10%) RPA | 0,164 | 0,170 | 0,171 | | |

Gegenüber den Vergleichsmischungen zeichnen sich die erfindungsgemäßen Mischungen durch einen verbesserten Rollwiderstand aus (tan δ gemessen bei 70°C). Ferner führen die erfindungsgemäßen Silanmischungen zu Vorteilen in der dynamischen Steifigkeit (G' (100%) gemessen bei 70°C).

### Beispiel 32: Gummitechnische Untersuchungen

Die für die Kautschukmischungen verwendete Rezeptur ist in der folgenden Tabelle 4 angegeben. Dabei bedeutet die Einheit phr Gewichtsanteile, bezogen auf 100 Teile des eingesetzten Rohkautschuks. In den Silanmischungen wird ein Teil des während der Vulkanisation mit dem Kautschuk reagierenden Silans durch das zweite Silan ersetzt, das dem Kautschuk gegenüber unreaktiv ist.

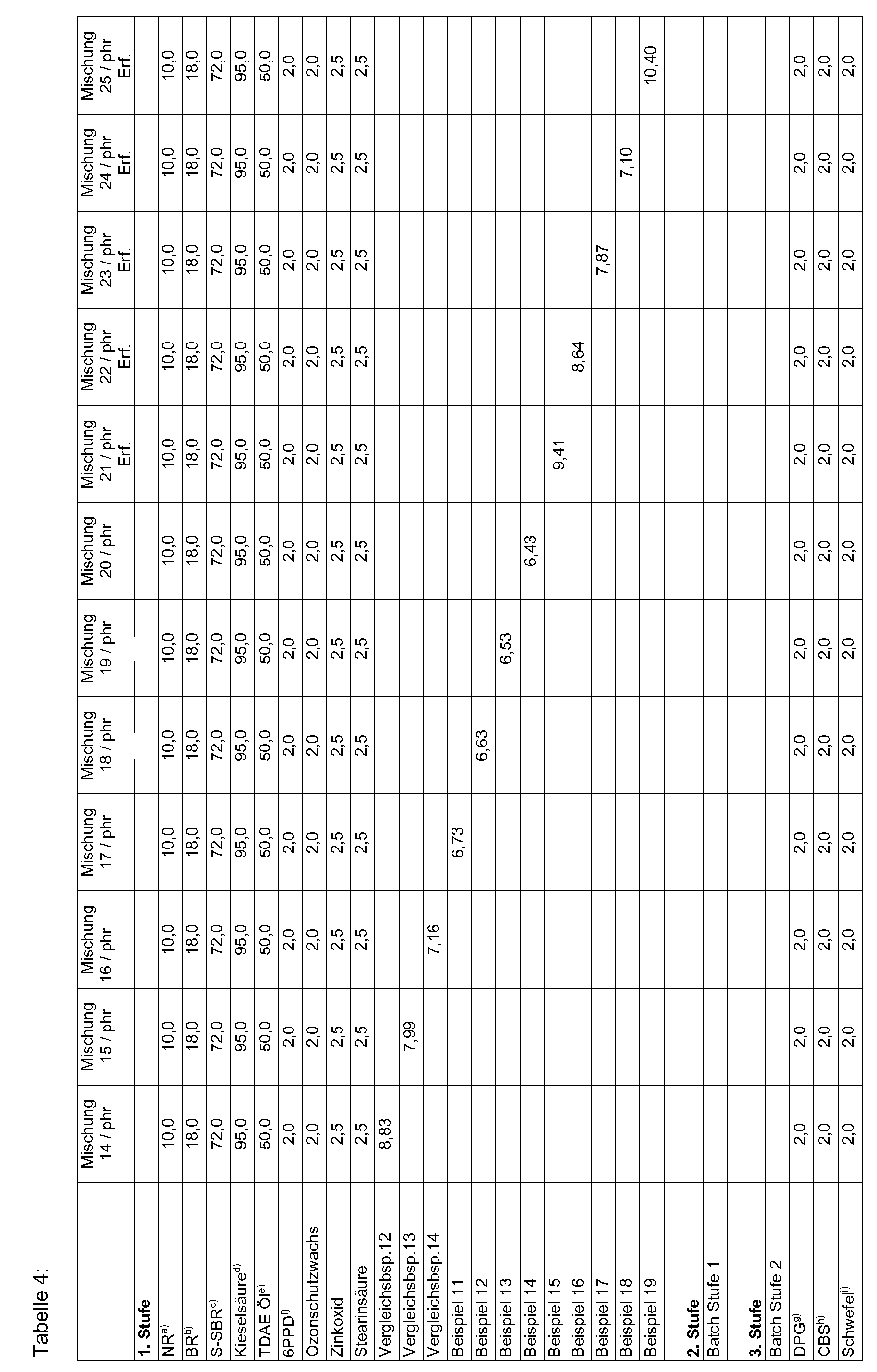

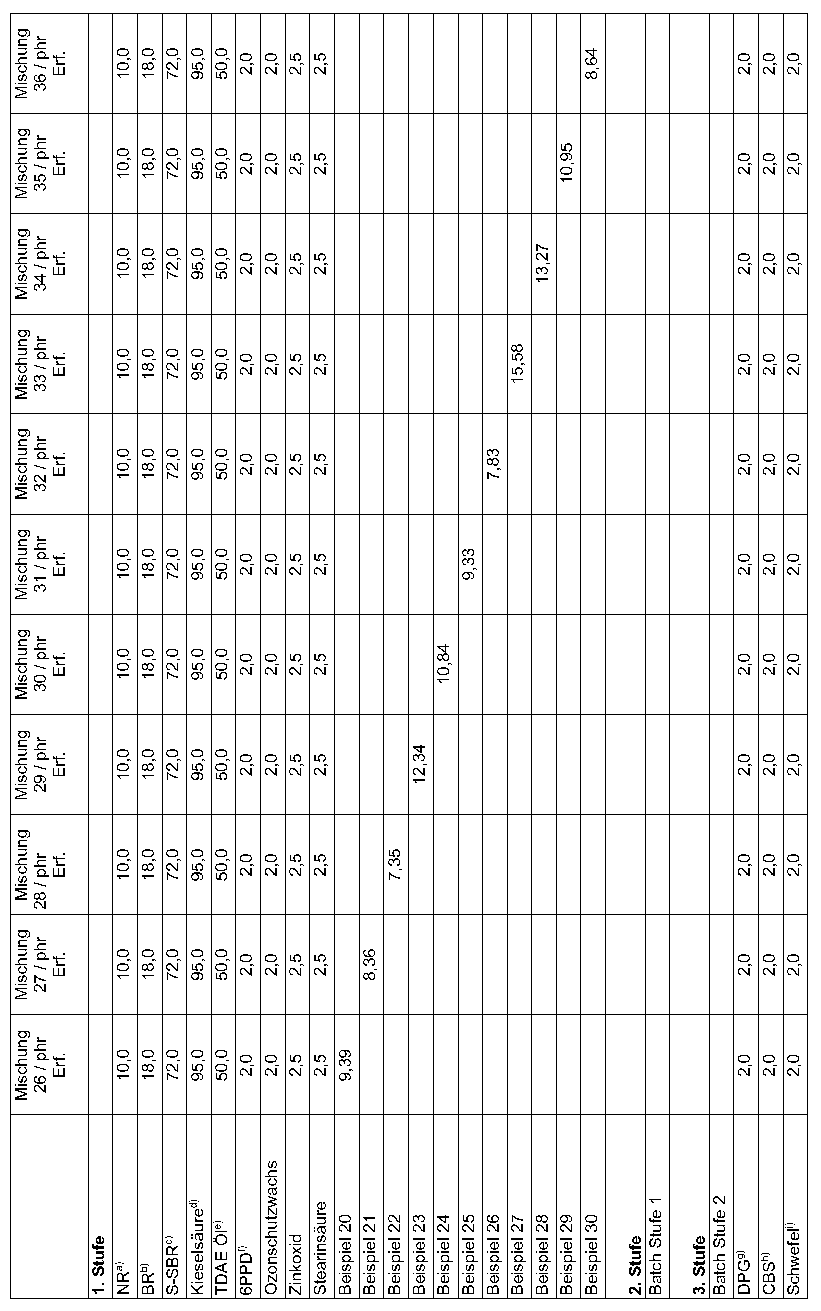

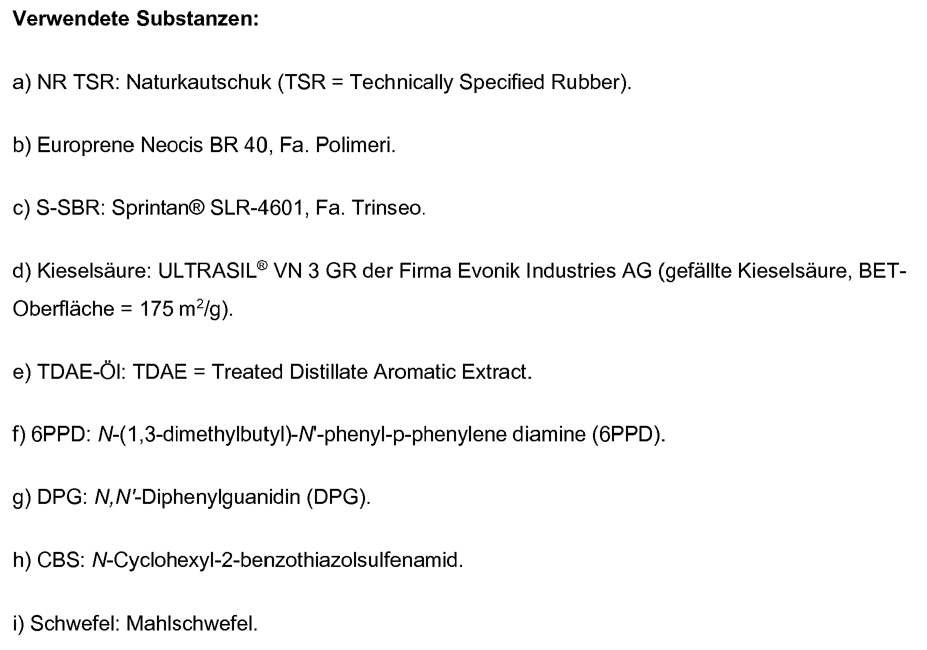

### i) Schwefel: Mahlschwefel.

Die Mischungsherstellung erfolgte unter in der Kautschukindustrie üblichen Verfahren in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95 - t100 (gemessen am Moving Disc Rheometer gemäß ASTM D 5289-12/ ISO 6502) unter Druck bei 160°C - 170°C hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgte gemäß der in Tabelle 2 angegebenen Prüfmethode. Die Ergebnisse der gummitechnischen Prüfung sind in Tabelle 5 angegeben.

**Tabelle 5:**

| | Mischung 14 | Mischung 15 | Mischung 16 | Mischung 17 | Mischung 18 |
|---|---|---|---|---|---|
| G'(100%) RPA/ MPa | 417 | 387 | 403 | 684 | 678 |
| tan δ (10%) RPA | 0,214 | 0,221 | 0,223 | 0,187 | 0,180 |
| | | | | | |

| | Mischung 19 | Mischung 20 | Mischung 21 Erf. | Mischung 22 Erf. | Mischung 23 Erf. |
|---|---|---|---|---|---|
| G'(100%) RPA/ MPa | 708 | 571 | 731 | 726 | 683 |
| tan δ (10%) RPA | 0,172 | 0,196 | 0,155 | 0,158 | 0,166 |
| | | | | | |

| | Mischung 24 Erf. | Mischung 25 Erf. | Mischung 26 Erf. | Mischung 27 Erf. | Mischung 28 Erf. |
|---|---|---|---|---|---|
| G'(100%) RPA/ MPa tan δ (10%) RPA | 598 0,183 | 689 0,164 | 700 0,163 | 678 0,167 | 695 0,163 |
| | | | | | |

| | Mischung 29 Erf. | Mischung 30 Erf. | Mischung 31 Erf. | Mischung 32 Erf. | Mischung 33 Erf. |
|---|---|---|---|---|---|
| G'(100%) RPA/ MPa | 639 | 632 | 642 | 589 | 569 |
| tan δ (10%) RPA | 0,148 | 0,161 | 0,171 | 0,179 | 0,147 |
| | | | | | |

| | Mischung 34 Erf. | Mischung 35 Erf. | Mischung 36 Erf. | | |
|---|---|---|---|---|---|
| G'(100%) RPA/ MPa | 594 | 603 | 573 | | |
| tan δ (10%) RPA | 0,154 | 0,165 | 0,179 | | |

Der anteilige Austausch des kautschukreaktiven Silans durch das zweite Silan führt in den erfindungsgemäßen Mischungen zu einem verbesserten Rollwiderstand (tan δ gemessen bei 70°C) im Vergleich zu den Vergleichsmischungen. Ferner führen die erfindungsgemäßen Silanmischungen zu Vorteilen in der dynamischen Steifigkeit (G' (100%) gemessen bei 70°C).

## Patentansprüche

1. Silanmischung, enthaltend ein Silan der Formel I
(R¹)_{y}(R²)_{3-y}Si-R³-(S-R⁴)ₙ-Sₓ-R⁵ (I),
und ein Silan der Formel II
(R¹)_{y}(R²)_{3-y}Si-R³-Si(R¹)_{y}(R²)_{3-y} (II),
wobei R¹ gleich oder verschieden sind und C1-C10-Alkoxygruppen, Phenoxygruppe, C4-C10-Cycloalkoxygruppen oder Alkylpolyethergruppe -O-(R⁶-O)ᵣ-R⁷ mit R⁶ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, r eine ganze Zahl von 1 bis 30, und R⁷ eine unsubstituierte oder substituierte, verzweigte oder unverzweigte einbindige Alkyl-, Alkenyl-, Aryl- oder Aralkylgruppen ist,
R² gleich oder verschieden sind und C6-C20-Arylgruppen, C1-C10-Alkylgruppen, C2-C20-Alkenylgruppe, C7-C20-Aralkylgruppe oder Halogen ist,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
R⁴ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
x eine ganze Zahl von 1 bis 10 ist,
für x gleich 1 R⁵ Wasserstoff oder eine -C(=O)-R⁸ Gruppe mit R⁸ gleich Wasserstoff, eine C1-C20 Alkylgruppe, C6-C20-Arylgruppen, C2-C20-Alkenylgruppe oder eine C7-C20-Aralkylgruppe ist und n gleich 1, 2 oder 3 ist,
für x gleich 2 bis 10 R⁵ gleich -(R⁴-S)ₙ-R³-Si(R¹)_{y}(R²)_{3-y} ist und n gleich 1 ist,
und y gleich oder verschieden sind und 1, 2 oder 3 sind,
und das Molverhältnis an Silan der Formel I zu Silan der Formel II 15:85 - 90:10 beträgt.

2. Silanmischung gemäß Anspruch 1, **dadurch gekennzeichnet, dass** das Silan der Formel I (EtO)₃Si-(CH₂)₃-S-(CH₂)₆-S₂-(CH₂)₆-S-(CH₂)₃-Si(OEt)₃, (EtO)₃Si-(CH₂)₃-S-(CH₂)₆-S-C(=O)-CH3, (EtO)₃Si-(CH₂)₃-S-(CH₂)₆-S-C(=O)-C₇H₁₅ oder (EtO)₃Si-(CH₂)₃-S-(CH₂)₆-S-C(=O)-C17H35 und das Silan der Formel II (EtO)3Si-(CH2)8-Si(OEt)3ist.

3. Silanmischung gemäß Anspruch 1, **dadurch gekennzeichnet, dass** das Molverhältnis an Silan der Formel I zu Silan der Formel II 30:70 - 86:14 beträgt.

4. Verfahren zur Herstellung von Silanmischung gemäß Anspruch 1, **dadurch gekennzeichnet, dass** man das Silan der Formel I
(R¹)y(R²)_{3-y}Si-R³-(S-R⁴)ₙ-Sₓ-R⁵ (I),
und ein Silan der Formel II
(R¹)_{y}(R²)_{3-y}Si-R³-Si(R¹)_{y}(R²)_{3-y} (II),
wobei R¹, R², R³, R⁴, R⁵, n, x und y die oben genannte Bedeutung haben,
in einem Molverhältnis von 15:85 - 90:10 mischt.

5. Verfahren zur Herstellung von Silanmischung gemäß Anspruch 4, **dadurch gekennzeichnet, dass** das Molverhältnis an Silan der Formel I zu Silan der Formel II 30:70 - 86:14 beträgt.

6. Verfahren zur Herstellung von Silanmischung gemäß Anspruch 4, **dadurch gekennzeichnet, dass** das Silan der Formel I (EtO)₃Si-(CH₂)₃-S-(CH₂)₆-S2-(CH₂)₆-S-(CH₂)₃-Si(OEt)₃, (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ oder (EtO)₃Si-(CH₂)₃-S-(CH₂)₆-S-C(=O)-C₁₇H₃₅ und das Silan der Formel II (EtO)₃Si-(CH₂)₈-Si(OEt)3 ist.

## Claims

1. Silane mixture comprising a silane of the formula I
(R¹)_{y}(R²)_{3-y}Si-R³-(S-R⁴)ₙ-Sₓ-R⁵ (I)
and a silane of the formula II
(R¹)_{y}(R²)_{3-y}Si-R³-Si(R¹)_{y}(R²)_{3-y} (II)
where R¹ are the same or different and are C1-C10-alkoxy groups, phenoxy group, C4-C10-cycloalkoxy groups or alkyl polyether group -O-(R⁶-O)ᵣ-R⁷ where R⁶ are the same or different and are a branched or unbranched, saturated or unsaturated, aliphatic, aromatic or mixed aliphatic/aromatic divalent C1-C30 hydrocarbon group, r is an integer from 1 to 30, and R⁷ is an unsubstituted or substituted, branched or unbranched monovalent alkyl, alkenyl, aryl or aralkyl group,
R² are the same or different and is C6-C20-aryl groups, C1-C10-alkyl groups, C2-C20-alkenyl group, C7-C20-aralkyl group or halogen,
R³ are the same or different and are a branched or unbranched, saturated or unsaturated, aliphatic, aromatic or mixed aliphatic/aromatic divalent C1-C30 hydrocarbon group,
R⁴ are the same or different and are a branched or unbranched, saturated or unsaturated, aliphatic, aromatic or mixed aliphatic/aromatic divalent C1-C30 hydrocarbon group,
x is an integer from 1 to 10,
when x is 1 R⁵ is hydrogen or a -C(=O)-R⁸ group with
R⁸ = hydrogen, a C1-C20 alkyl group, C6-C20-aryl groups, C2-C20-alkenyl group or a C7-C20-aralkyl group and n is 1, 2 or 3,
when x is 2 to 10 R⁵ is -(R⁴-S)ₙ-R³-Si(R¹)_{y}(R²)_{3-y} and n is 1,
and y are the same or different and are 1, 2 or 3, and the molar ratio of silane of the formula I to silane of the formula II is 15:85-90:10.

2. Silane mixture according to Claim 1, **characterized in that** the silane of the formula I is (EtO) ₃Si-(CH₂)₃-S-(CH₂)₆-S₂-(CH₂)₆-S-(CH₂)₃-Si(OEt)₃, (EtO)₃Si-(CH₂)₃-S-(CH₂)₆-S-C(=O)-CH_{3,} (EtO)₃Si-(CH₂)₃-S-(CH₂)₆-S-C(=O)-C₇H₁₅ or (EtO)₃Si-(CH₂)₃-S-(CH₂)₆-S-C(=O)-C₁₇H₃₅ and the silane of the formula II is (EtO)₃Si-(CH₂) ₈-Si (OEt)₃.

3. Silane mixture according to Claim 1, **characterized in that** the molar ratio of silane of the formula I to silane of the formula II is 30:70-86:14.

4. Process for preparing silane mixture according to Claim 1, **characterized in that** the silane of the formula I
(R¹)_{y}(R²)_{3-y}Si-R³-(S-R⁴)ₙ-Sₓ-R⁵ (I)
and a silane of the formula II
(R¹)_{y}(R²)_{3-y}Si-R³-Si(R¹)_{y}(R²)_{3-y} (III)
where R¹, R², R³, R⁴, R⁵, n, x and y have the definition given above
are mixed in a molar ratio of 15:85-90:10.

5. Process for preparing silane mixture according to Claim 4, **characterized in that** the molar ratio of silane of the formula I to silane of the formula II is 30:70-86:14.

6. Process for preparing silane mixture according to Claim 4, **characterized in that** the silane of the formula I is (EtO) ₃Si- (CH₂) ₃-S- (CH₂) ₆-S₂- (CH₂) ₆-S-(CH₂)₃-Si(OEt)₃, (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ or (EtO)₃Si-(CH₂)₃-S-(CH₂)₆-S-C(=O)-C₁₇H₃₅ and the silane of the formula II is (EtO)₃Si-(CH₂)₈-Si(OEt)₃.

## Revendications

1. Mélange de silanes contenant un silane de Formule I
(R¹)_{y}(R²)_{3-y}Si-R³-(S-R⁴)ₙ-Sₓ-R⁵ (I) ,
et un silane de Formule II
(R¹)_{y}(R²)_{3-y}Si-R³-Si(R¹)_{y}(R²)_{3-y} (II) ,
dans lesquelles les R¹ sont identiques ou différents et représentent des groupes alcoxy en C1-C10, un groupe phénoxy, des groupes cycloalcoxy en C4-C10 ou un groupe alkylpolyéther-O-(R₆-O)ᵣ-R⁷, les R⁶ étant identiques ou différents et représentant un groupe hydrocarboné en C1 à C30 divalent, ramifié ou non ramifié, saturé ou insaturé aliphatique, aromatique ou mixte aliphatique/aromatique, r représente un nombre entier de 1 à 30, et R⁷ représente un groupe alkyle, alcényle, aryle ou aralkyle monovalent non substitué ou substitué, ramifié ou non ramifié,
les R² sont identiques ou différents et représentent des groupes aryle en C6-C20, des groupes alkyle en C1-C10, un groupe alcényle en C2-C20, un groupe aralkyle en C7-C20 ou un halogène,
les R³ sont identiques ou différents et représentent un groupe hydrocarboné en C1-C30 divalent ramifié ou non ramifié, saturé ou insaturé, aliphatique, aromatique ou mixte aliphatique/aromatique,
les R⁴ sont identiques ou différents et représentent un groupe hydrocarboné en C1-C30 divalent ramifié ou non ramifié, saturé ou insaturé, aliphatique, aromatique ou mixte aliphatique/aromatique,
x représente un nombre entier de 1 à 10,
pour x égal à 1, R⁵ représente un hydrogène ou un groupe -C(=O)-R⁸, R⁸ représentant un hydrogène, un groupe alkyle en C1-C20, un groupe aryle en C6-C20, un groupe alcényle en C2-C20 ou un groupe aralkyle en C7-C20 et n est égal à 1, 2 ou 3,
pour x égal à 2 à 10, R⁵ est égal à -(R⁴-S)ₙ-R³-Si(R¹)_{y}(R²)_{3-y} et n est égal à 1, et les y sont identiques ou différents et représentent 1, 2 ou 3,
et le rapport en moles du silane de Formule I au silane de Formule II étant de 15:85 à 90:10.

2. Mélange de silanes selon la revendication 1, **caractérisé en ce que** le silane de Formule I est (EtO)₃Si-(CH₂)₃-S-(CH₂)₆-S₂-(CH₂)₆-S-(CH₂)₃-Si(OEt)₃, (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ ou (EtO)₃Si-(CH₂)₃-S-(CH₂)₆-S-C(=O)C17H35 et le silane de Formule II est (EtO)₃Si-(CH₂) ₈-Si (OEt)₃.

3. Mélange de silanes selon la revendication 1, **caractérisé en ce que** le rapport en moles du silane de Formule I au silane de Formule II est de 30:70 à 86:14.

4. Procédé de fabrication du mélange de silanes selon la revendication 1, **caractérisé en ce qu'**on mélange le silane de Formule I
(R¹)_{y}(R²)_{3-y}Si-R³-(S-R⁴)ₙ-Sₓ-R⁵ (I),
et un silane de Formule II
(R¹)_{y}(R²)_{3-y}Si-R³-Si(R¹)y(R²)_{3-y} (II) ^{,}
dans lesquelles R¹, R², R³, R⁴, R⁵, n, x et y ont les significations données ci-dessus,
selon un rapport en moles de 15:85 à 90:10.

5. Procédé de fabrication du mélange de silanes selon la revendication 4, **caractérisé en ce que** le rapport en moles du silane de Formule I au silane de Formule II est de 30:70 à 86:14.

6. Procédé de fabrication du mélange de silanes selon la revendication 4, **caractérisé en ce que** le silane de Formule I est (EtO)₃Si-(CH₂)₃-S-(CH₂)₆-S₂-(CH₂)₆-S-(CH₂)₃-Si(OEt) ₃, (EtO)₃Si-(CH₂)₃-S-(CH₂)₆-S-C(=O)-CH_{3,} (EtO ₃Si-(CH₂)₃-S-(CH₂)₆-S-C(=O)-C₇H₁₅ ou (EtO)₃Si-(CH₂)₃-S-(CH₂)₆-S-C(=O)C₁₇H₃₅ et le silane de Formule II est (EtO) ₃Si-(CH₂) ₈-Si (OEt) ₃.
